# EUROPEAN PATENT SPECIFICATION

(11) **EP 4 051 409 B1**
(45) Date of publication and mention of the grant of the patent: **21.10.2026**
(21) Application number: 21821801.4
(22) Date of filing: 04.06.2021
(51) Int. Cl.: B01D 35/143, A47L 9/14, A47L 9/19, B01D 46/44, B08B 15/00, B24B 55/06, B01D 46/00, B01D 50/20, B08B 15/04, B01D 45/12

(54) **FILTER ARRANGEMENTS FOR INDUSTRIAL DUST EXTRACTORS**
FILTERANORDNUNGEN FÜR INDUSTRIESTAUBSAUGER
AGENCEMENTS DE FILTRE POUR EXTRACTEURS DE POUSSIÈRE INDUSTRIELS

(30) Priority: 11.06.2020 SE 2050697; 09.07.2020 SE 2050865; 26.08.2020 SE 2050985
(43) Date of publication of application: 07.09.2022
(73) Proprietor: Husqvarna AB, 561 82 Huskvarna (SE)
(72) Inventor: SJÖBERG, Axel, 421 41 Västra Frölunda (SE); ELMESTRAND, Karl, 433 62 Sävedalen (SE); ERIKSSON, Jonas, 741 45 Knivsta (SE); WENNBERG, Elon, 422 42 Hisings Backa (SE)
(86) International application number: PCT/SE2021/050532
(87) International publication number: WO 2021/251871

(56) References cited:
- WO-A1-2020/086695
- WO-A2-2012/013483
- US-A1- 2011 185 895
- US-A1- 2014 260 994
- US-A1- 2014 260 994
- US-A1- 2015 059 583
- US-B2- 9 949 606

## Description

### TECHNICAL FIELD

The present disclosure relates to heavy duty dust extraction devices for use with construction equipment such as concrete grinders and saws. There are disclosed dust extractors, filter arrangements, methods, and control units for verifying a filter function in a dust extractor. There are also disclosed fleet management systems for monitoring and servicing a plurality of dust extractors.

### BACKGROUND

Dust and slurry are created by cutting, drilling, grinding and/or demolishing concrete, brick, and other hard construction materials. The dust and slurry may be collected by a dust extractor and removed from the construction site in a controlled manner. Dust extractors are vacuum devices which collect the dust and slurry by generating a vacuum or an under-pressure by means of at least one fan or impeller and motor arrangement, i.e., similar to a vacuum cleaner. Many industrial grade dust extractors comprise a cyclone or separator with a pre-filter followed by an essential filter such as a high-efficiency particulate air (HEPA) filter.

The filter function, and the function of the essential filter in particular, is important in order not to negatively affect operator health and pollute the environment. A dust extractor without a correctly installed essential filter represents a safety hazard which is to be avoided.

The filters in a dust extractor gradually become particle-laden by particulate matter during operation. A clogged filter has an adverse effect on the performance of the dust extractor and needs to be cleaned or replaced with a new filter. However, cleaning or replacing filters too often adds an unnecessary overhead to the dust extraction operation which is to be avoided.

There is a need for improved filter arrangements for industrial dust extractors which allow both efficient, clean as well as safe dust extraction.

US 2014/0260994 A1 shows a portable industrial air filtration device configured to detect a state of an air filter based on pressure sensors arranged upstream and downstream of the filter.

### SUMMARY

It is an object of the present disclosure to provide improved filter arrangements for use with industrial grade dust extractors which allow for automatic detection of filter state, such that dust extraction operation can be prevented in case an essential filter is not in place and/or fully functional.

This object is obtained by a filter arrangement for a heavy duty dust extractor. The filter arrangement comprises a filter holder, an essential filter, a filter inlet, a filter outlet, a first air pressure sensor and a second air pressure sensor. The first air pressure sensor is arranged to indicate an inlet air pressure associated with the filter inlet and the second air pressure sensor is arranged to indicate an outlet air pressure associated with the filter outlet. The filter arrangement further comprises a control unit arranged to detect a state of the essential filter based on a pressure difference between the inlet air pressure and the outlet air pressure, wherein the control unit is arranged to detect a missing essential filter if the pressure difference is smaller than a configurable missing filter threshold , wherein the control unit is arranged to determine the pressure difference between the inlet air pressure and the outlet air pressure after a settling time duration of filter operation.

This way it can, e.g., be determined that an essential filter is present (and correctly mounted) in the dust extractor. Operation without a functional essential filter can thereby be avoided. The detection of filter state is robust and can be implemented with relatively low cost. Legacy filter arrangements can be upgraded to a filter arrangement capable of detecting essential filter state by adding pressure sensors and a control unit. By determining the pressure difference between the inlet air pressure and the outlet air pressure after a settling time duration of filter operation the influence from initial transients is reduced, thereby improving robustness and detection performance. Initial transients may, e.g., occur during start of the dust extractor. The settling time duration may, e.g., be determined as an elapsed time duration from start of the dust extractor.

According to aspects, the control unit is arranged to determine the pressure difference between the inlet air pressure and the outlet air pressure by averaging, filtering, and/or low-pass filtering measurement values from the first and second air pressure sensors.

This way the effects from pressure transients and other temporary phenomena are reduced, which improves robustness and detection performance. The filtering operation has a smoothing effect which allows the determining of trends and filter states despite large variations in instantaneous pressure measurement values.

According to aspects, the control unit is arranged to detect a missing essential filter if the pressure difference is smaller than a configurable missing filter threshold. By using a configurable threshold the set-up can be adapted to various operating conditions and to different machines. The system can also be calibrated both during production and in field which improves detection performance.

According to aspects, the control unit is arranged to detect a malfunctioning essential filter if the pressure difference is between the missing filter threshold and a configurable filter malfunction threshold. Thus, a reliable method for detecting malfunctioning essential filters is provided. Various actions can be triggered in case a malfunctioning filter is detected, such as turning off the dust extractor or triggering a warning signal to the operator.

According to aspects, the control unit is arranged to detect a particle-laden essential filter if the pressure difference is above a configurable particle-laden filter threshold. This way an operator can more conveniently determine when it is time to replace or to service the essential filter. This saves time since the operator need not manually check the filter status regularly. Also, prolonged operation with particle-laden filters can be avoided in a convenient and reliable manner.

According to aspects, the first air pressure sensor and the second air pressure sensor are arranged to measure respective absolute air pressure values. These absolute sensor readings allow for a more refined status information to be made available.

According to aspects, the first air pressure sensor and the second air pressure sensor are comprised in a differential air pressure sensor arrangement configured to measure relative air pressure. Differential pressure sensors normally require less calibration compared to absolute sensors, which is an advantage.

According to aspects, the filter arrangement comprises a pre-filter with a pre-filter inlet and a pre-filter outlet arranged upstream from the essential filter. A third pressure sensor and a fourth pressure sensor are arranged to measure a pressure difference between the pre-filter inlet air pressure and the pre-filter outlet air pressure. The control unit is arranged to detect a state of the pre-filter based on the pressure difference between the pre-filter inlet air pressure and the pre-filter outlet air pressure. Thus, detection of pre-filter state is also provided which is an advantage.

There are also disclosed herein dust extractors, control units, essential filters, fleet management systems, display devices, and computer program products associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where
Figures 1A-C show example dust extractors;
Figures 2-3 schematically illustrate example filter arrangements;
Figures 4A-B show filters with integrated sensor arrangements;
Figures 5A-B show filters with integrated sensor arrangements;
Figure 6 schematically shows a mechanism for preventing machine operation;
Figure 7 illustrates a range of differential pressures;
Figure 8 schematically illustrates a fleet management system;
Figure 9 is a flow chart illustrating methods;
Figure 10 shows an example control unit;
Figure 11 schematically illustrates a computer program product;
Figure 12 is a graph exemplifying consumed motor power over time;
Figures 13A-C illustrate a mechanical arrangement for detecting essential filter presence;
Figure 14 illustrates switches for detecting essential filter presence; and
Figures 15-16 show example pressure difference thresholds.

### DETAILED DESCRIPTION

The invention will now be described more fully hereinafter with reference to the accompanying drawings, in which certain aspects of the invention are shown.

This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

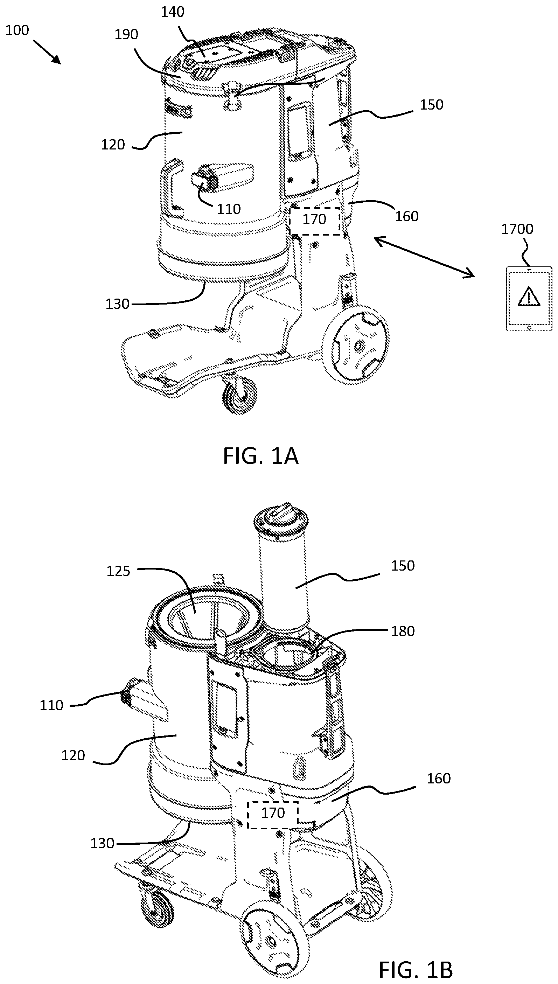

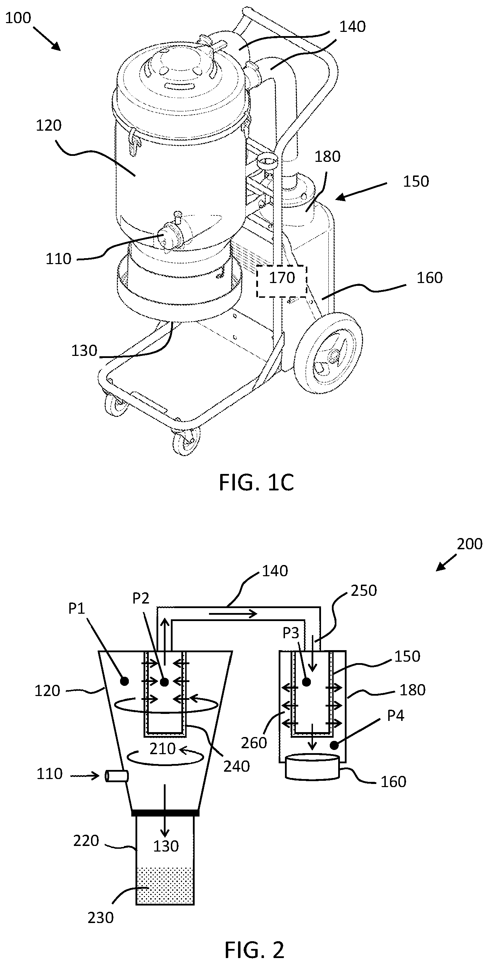

Figures 1A and 1B illustrate one example dust extractor 100 while Figure 1C illustrate another example dust extractor 100. The dust extraction devices 100 can be connected via a hose to a dust generator (not shown in Figures 1A-C), such as a core drill, a floor grinder, a concrete saw, or the like. The dust and slurry from the dust generator enters the dust extractor via an inlet 110. A cyclone 120 is arranged after the inlet, i.e., downstream with respect to the airflow direction into the inlet 110. The cyclone 120 may, e.g., comprise a pre-filter for separating out larger debris particles from the particle-laden airflow entering the inlet 110. An example pre-filter 125 is shown in Figure 1B. The larger debris particles trapped by the cyclone 120 may be collected via an outlet 130 of the cyclone 120, e.g., in a disposable plastic bag or other dust container. This bag or container corresponds to the dust bag found in most vacuum cleaners for domestic use. It is appreciated that such vacuum cleaners for domestic use are not suitable for industrial application and cannot be used for extracting dust and slurry during construction work.

The air flow continues from the cyclone 120 via one or more conduits 140 into respective essential filters 150. An essential filter is an air filter designed to meet strict requirements on filtering function. The conduit arrangement transporting air between the cyclone 120 and the essential filter 150 may be integrally formed with a body of the dust extractor 100 as shown in Figures 1A-B or formed by external tubes as illustrated in Figure 1C.

The essential filter 150 may, e.g., be a High-Efficiency Particulate Air (HEPA) filter, but other air filters may also be used. HEPA, also known as high-efficiency particulate absorbing and high-efficiency particulate arrestance, is an efficiency standard of air filters. Filters meeting the HEPA standard must satisfy certain levels of efficiency. HEPA was commercialized in the 1950s, and the original term became a registered trademark and later a generic term for highly efficient filters. It is noted that the techniques disclosed herein can be applied to dust extraction devices with any number of air filters 150, including dust extraction devices comprising combinations of different air filters.

The essential filter is normally arranged in a filter holder 180, as exemplified in Figure 1B. Cylindrically shaped essential filters are common, but rectangular and other shapes of essential filters are also known. Essential filters are known in general and will therefore not be discussed in more detail herein.

A blower arrangement 160 is arranged downstream from the one or more essential filters 150. Depending on performance characteristics, and without loss of generality, the blower arrangement 160 may also be referred to as a fan arrangement or a compressor arrangement. Pressure ratio or pressure rise is defined herein as the ratio of the impeller discharge pressure to the impeller inlet pressure, which is sometimes also referred to as suction pressure. In general, a blower has a slightly higher pressure rise than a fan: from 1.11 to 1.2. For applications where the required pressure rise is greater than 1.2, the device is usually referred to as a compressor, because more 'compression' is done. The term 'blower' will be used throughout this disclosure, although it is appreciated that the techniques disclosed herein are suitable for use with both fans, blowers, and compressors.

The blower arrangement generates a suction force, i.e., a vacuum or an under-pressure relative to atmospheric pressure which draws the particle-laden airflow in through the inlet 110, past the cyclone 120, and through the one or more essential filters 150. Herein, an under-pressure value indicates how far below a reference pressure level, such as atmospheric pressure, the pressure in the airflow is. Under-pressure is as mentioned above also sometimes referred to as vacuum level.

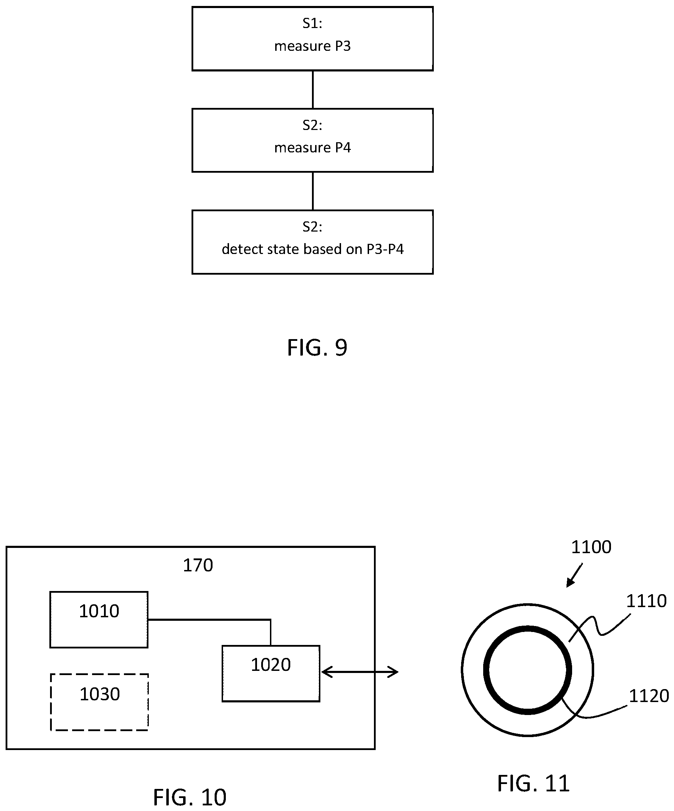

The dust extractors 100 shown in Figures 1A-C also comprise a control unit 170, only schematically indicated in Figures 1A-C. The control unit 170 is configured to control various operations by the dust extractor such as activating the motor to drive the impeller in the blower arrangement 160 in order to generate the suction force. This control unit will be discussed in more detail below in connection to Figure 10.

Some dust extractors comprise a lid 190 arranged to enclose parts like the essential filter 150. The conduit 140 between cyclone 120 and the essential filter may be integrated in the lid 190. In this case the conduit 140 may open up to the surrounding environment when the lid is not closed, thereby preventing operation of the dust extractor 100.

Figure 2 schematically illustrates a filter arrangement 200 for a heavy duty dust extractor 100 such as those shown in Figures 1A-C. This filter arrangement comprises a cyclone 120 connected upstream from an essential filter 150, i.e., between the inlet 110 and the essential filter 150..

Particle laden air enters the filter arrangement via the inlet 110 into the cyclone 120 where a rotation 210 of the air flow is induced. A dust container 220 collects the heavier particles and debris 230 that are trapped by the cyclone 120. This dust container 220 may, e.g., be a disposable plastic bag or a removable container. A pre-filter 240 filters the air flow before it enters the conduit 140 between the cyclone 120 and the essential filter arrangement. The air pressure in the cyclone exterior to the pre-filter 240 is denoted P1, while the air pressure immediately downstream from the pre-filter or internal to the pre-filter 240 is denoted P2. Normally there is a pressure drop over the pre-filter, i.e., during normal operation P1>P2.

A filter holder 180 fixes the essential filter 150 in position. The essential filter 150 comprises a filter inlet 250 and a filter outlet 260. An inlet air pressure P3 is associated with the filter inlet 250 (often the same pressure as or at least similar to pressure P2). An outlet air pressure P4 is associated with the filter outlet 260. During normal dust extraction operation, there is a pressure drop also over the essential filter 150, i.e., P3>P4 during normal dust extraction operation.

The magnitude of the pressure drop |P1-P2| and |P3-P4| is a function of the particle load of the filter. When the pre-filter 240 or the essential filter 150 is fully particle laden, i.e., clogged, the blower arrangement 160 will build a vacuum downstream from the filter. This means that there will be a relatively large pressure drop over the filter. During normal operation, i.e., when the filter is not fully particle laden, the pressure drop will be smaller. For filters arranged in series, such as schematically shown in Figure 2, air pressure P1 is greater than the air pressure P2, which is similar to or slightly larger than the air pressure P3, that in turn is greater than the air pressure P4, i.e., P1>P2≥P3>P4.

If an essential filter 150 is not present in the filter holder 180, then the essential filter inlet air pressure P3 will be equal to or at least very similar to the essential filter outlet air pressure P4. It has been realized that this condition, i.e., P3 ≈ P4, can be used to verify that an essential air filter is correctly installed in the dust extractor 100.

A leakage in the essential filter 150 can be detected by monitoring the pressure difference P3-P4 (or P2-P4). A small pressure difference P3-P4 or P2-P4 can be used to detect leakage in the essential filter 150.

A fully laden or clogged essential filter 150 in need of cleaning or replacement can also be detected by monitoring the pressure difference P3-P4. A too large pressure difference P3-P4 can be used to detect a fully particle laden essential filter 150.

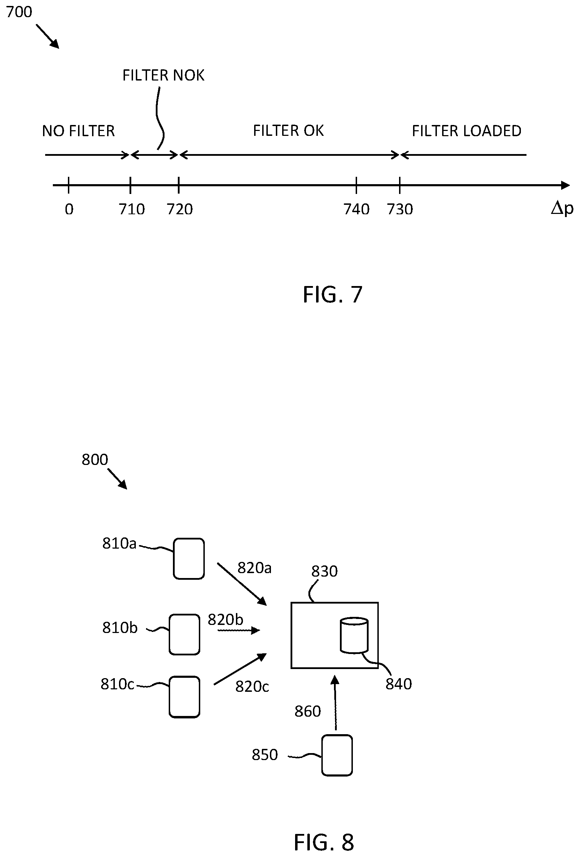

These pressure difference ranges will be discussed in more detail below in connection to Figure 7.

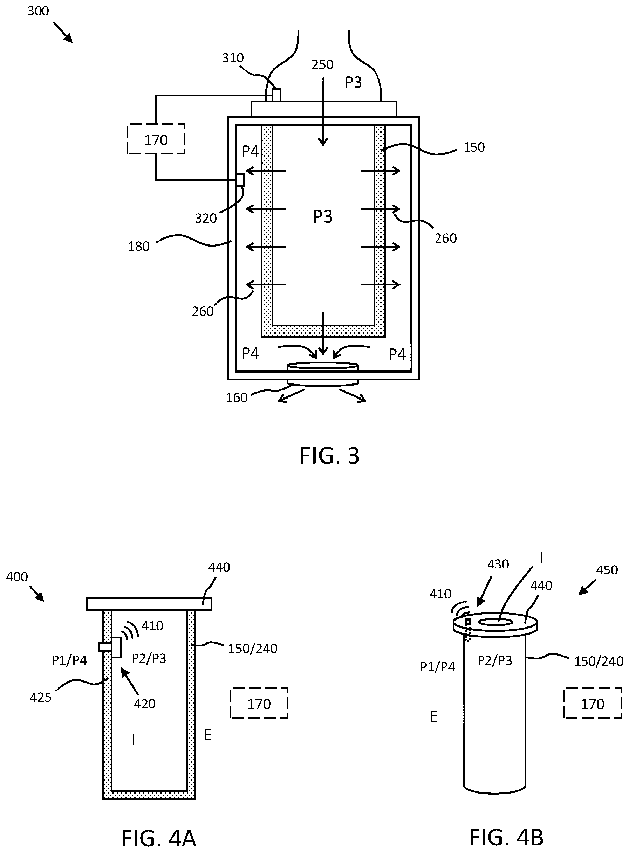

Figure 3 shows an example filter arrangement 300. To measure pressure differences, a first air pressure sensor 310 may be arranged to indicate the inlet air pressure P3 associated with the filter inlet 250 and a second air pressure sensor 320 may be arranged to indicate the outlet air pressure P4 associated with the filter outlet 260. It is appreciated that the first air pressure sensor may also be an air pressure sensor arranged to detect the pressure P2, i.e., immediately downstream from the pre-filter. The first and second air pressure sensors may be realized as separate absolute pressure sensors or integrated into a differential pressure sensor. An advantage with differential pressure sensors is the reduced calibration requirement. An advantage with absolute pressure sensors is a more refined error detection, since error symptoms can be detected more clearly by knowing the actual absolute pressures at various stages in the filter arrangement, such as P1, P2, P3, and P4.

The filter arrangement 300 also comprises a control unit 170 arranged to detect a state of the essential filter 150 based on a pressure difference between the inlet air pressure P3 and the outlet air pressure P4. Possible detectable states may, e.g., be that the essential filter 150 is missing, is malfunctioning due to, e.g., leakage, or that the filter is fully particle laden, i.e., clogged.

Herein, the term malfunction, when used in connection to an essential filter, is to be construed as some form of leakage, leading to a reduction in pressure drop across the filter. A particle laden filter is not denoted as a malfunctioning filter (since it is not broken, merely inoperative due to being clogged).

In other words, to generalize, Figure 3 shows an example filter arrangement 300 for a heavy duty dust extractor 100. The filter arrangement comprises a filter holder 180, an essential filter 150, a filter inlet 250, a filter outlet 260, a first air pressure sensor 310 and a second air pressure sensor 320. The first air pressure sensor 310 is arranged to indicate an inlet air pressure P2/P3 associated with the filter inlet 250 and the second air pressure sensor 320 is arranged to indicate an outlet air pressure P4 associated with the filter outlet 260. The filter arrangement further comprises a control unit 170 arranged to detect a state of the essential filter 150 based on a pressure difference between the inlet air pressure P2/P3 and the outlet air pressure P4.

A pressure sensor such as the first and the second pressure sensors are normally wired to the control unit, and potentially also powered via this wire, although separate energy sources such as small batteries can also be used to drive the sensors. However, with reference to Figures 4A and 4B, at least one of the first and the second air pressure sensor 310, 320 may also be arranged to be wirelessly connected 410 to the control unit 170. This wireless connection may be realized by a low-cost low-power radio transceiver, such as a Bluetooth low energy radio transceiver. Radio circuits such as those used to open garage doors can also be used. Inductively coupled coils, such as circuits for radio frequency identification (RFID) may also be used to transfer information between pressure sensor and control unit 170.

According to some aspects, the first air pressure sensor 310 and the second air pressure sensor 320 are arranged to measure respective absolute air pressure values. In this case the control unit 170 obtains the pressure values separately from the sensors and determines the pressure difference, after optional filtering and/or averaging operations. It may be an advantage to obtain separate pressure readings since the pressure readings can be used for diagnostic purposes other than detecting the state of the essential filter 150.

According to some other aspects, the first air pressure sensor 310 and the second air pressure sensor 320 are comprised in a differential air pressure sensor arrangement configured to measure relative air pressure. In this case the control unit 170 instead obtains the differential pressure reading directly from the sensor. The control unit can of course still apply filtering or averaging operations to improve the detection performance and to suppress influence from transient readings. An advantage with differential pressure sensors compared to absolute pressure sensors is the reduced need for calibration, since the first pressure sensor need not be calibrated against the second pressure sensor in a differential pressure sensor arrangement.

It is appreciated that the first 310 and the second 320 air pressure sensors may be arranged at different locations throughout the dust extractor design. For instance, the first air pressure sensor 310 may be arranged in the conduit 140 arranged to guide the air flow towards the filter inlet 250. Alternatively, the first air pressure sensor 310 may be arranged in an interior of the filter device, or in connection to the filter inlet, i.e., mounted on a filter flange.

The second air pressure sensor 320 may for instance be arranged in the filter housing 170 as schematically illustrated in Figure 3.

It is appreciated that the measured pressure difference may vary depending on, e.g., use case and other operating conditions. Thus, the control unit 170 is optionally arranged to determine the pressure difference between the inlet air pressure P2/P3 and the outlet air pressure P4 by averaging or low-pass filtering measurement values from the first and second air pressure sensors 310, 320. This way temporary transients in the pressure difference does not influence the detection of the essential filter state as much. This filtering can be a low complexity averaging operation, such as a time window averaging operation, or a more complex filtering operation such as a method based on Kalman filtering using a model of the system. The purpose of the filtering operation is to suppress transient behavior and measurement noise in order to be able to detect filter state more reliably without too high rate of false alarms.

According to some aspects, a detection delay of between 4-8 seconds, and preferably about 6 seconds, is desired. This acceptable detection latency may be used to determine suitable low-pass filtering bandwidths.

Also, transient behavior in the pressure differences P1-P2 and P3-P4 can be expected when powering up the dust extractor 100. To account for such initial transients, the control unit 170 is optionally arranged to determine the pressure difference between the inlet air pressure P2/P3 and the outlet air pressure P4 after a settling time duration of filter operation. This settling time duration may be pre-configured and defined in software such that it can easily be adjusted if needed. The time duration may, e.g., be defined as 2 seconds from start of the dust extractor.

A similar sensor arrangement may of course also be arranged in connection to the pre-filter 240 in order to measure a corresponding pressure drop P1-P2 (or P1-P3) over the pre-filter 240.

The measured pressure difference P3-P4 (and of course also the pressure difference P2-P4) can be used to detect if an essential filter 150 is present in the filter holder 180. In case no filter is present, there will only be a very small (or nonexistent) pressure drop between pressure P3 and pressure P4. The control unit 170 may therefore be arranged to detect a missing essential filter if the pressure difference is smaller than a configurable missing filter threshold 710. According to one example, this check is performed once at start-up. As the dust extractor 100 is powered up, the pressure difference P3-P4 is measured, potentially after a settling time duration. If the pressure difference is too small, then the control unit 170 may trigger an action to, e.g., generate a warning signal or even inactivate the dust extractor 100.

A too small pressure difference may be indicative of a malfunctioning essential filter 150. With reference to Figure 7, the control unit 170 may be arranged to detect a malfunctioning essential filter if the pressure difference is between the missing filter threshold 710 and a configurable filter malfunction threshold 720.

The various pressure difference thresholds discussed herein may be just constant threshold values, independent of any other dust extractor parameters. However, increased accuracy may be obtained if one or more thresholds are configured in dependence of an air flow through the essential filter 150, as well as on other filter parameters and dust extractor parameters. Air flow is a measure of the quantity of air which passes a given place in a system per unit of time, and can be measured in, e.g., liters/second. Air flow may be directly measured, e.g., by a Pitot tube or the like. Air flow may also be indirectly estimated based on, e.g., drawn blower motor power.

All filter and dust extractor combinations are associated with a nominal operating characteristic 1510, which describes the pressure difference over a new fully functional filter. This nominal operating characteristic may be an approximately linear or affine function, but other relationships may also be observed. This nominal operating characteristic can be obtained by laboratory experimentation or by computer simulation.

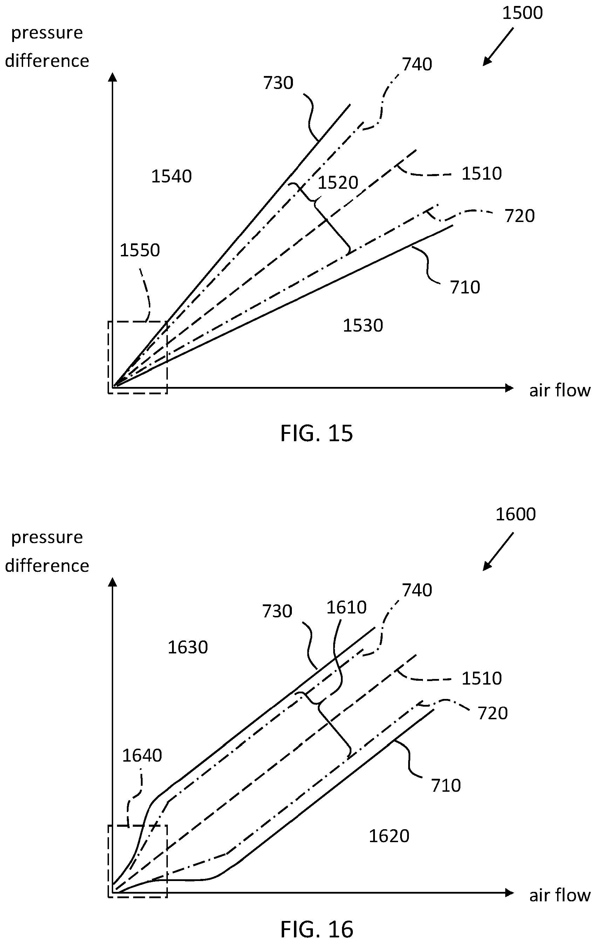

Various thresholds may be defined based on this nominal operating characteristic. Generally, a threshold function may be linear or non-linear. The function in Figure 16 is a non-linear and non-decreasing function of air flow through the essential filter 150, while the functions in Figure 15 are all linear functions.

The nominal operating characteristic 1510 for a reference essential filter 150, e.g., a new fresh filter, is a pressure drop value as function of air flow. The relationship between pressure drops over the filter and air flow through the filter may be a function of filter type, filter dimension, and possibly also environmental factors such as ambient humidity and height over sea level. These parameters may be pre-configured in the control unit 170, or manually configurable. An operator may, e.g., input filter type to the control unit 170, which then configures the nominal operating characteristics 1510 based on the filter type. Location in the world can also be input, whereby the control unit 170 may configure parameters such as height over sea level, average humidity and the like.

Suppose that the pressure drop over the filter can be modelled as $Δ p = {kx}_{flow} + m$ where Δ*p* is the pressure drop, *k* is a proportionality constant, and m is a constant bias, then the test statistic $T = \frac{Δ p - m}{{x}_{flow}} = k$ is at least approximately constant over different air flow levels. This test statistic T can then be compared against various constant thresholds, as discussed above in connection to Figure 7.

Figures 15 and 16 illustrate some example thresholds which vary with air flow through the essential filter 150. In both examples, the missing filter threshold 710 and/or the filter malfunction threshold 720 is configured in dependence of an air flow through the essential filter 150, shown on the x-axes of the graphs 1500, 1600.

The functions of air flow in both examples define an operating region 1520, 1610 around the nominal operating characteristic for a reference essential filter 1510. As long as the pressure difference is within this region, the filter is deemed to be fully operational, and no warning is triggered. However, if the pressure difference measured across the filter drops below the threshold 710, i.e., enters the region 1530, 1620, then a missing filter condition is detected. If the pressure difference drops below the threshold 720, then a malfunctioning filter condition is detected. It is appreciated that the filter malfunction feature can be implemented independently of the missing filter feature. In other words, a dust extractor may comprise a filter malfunction detection function but no missing filter detection function, and vice versa. A too large pressure difference P3-P4 may instead indicate a particle laden essential filter 150 in need of replacement or cleaning. The control unit 170 is therefore optionally arranged to detect a particle-laden essential filter if the pressure difference is above a configurable particle-laden filter threshold 730.

The same detection principles as discussed above in connection to Figures 15 and 16 may also be applied to detection of a particle-laden filter condition. Thus, if the pressure difference measured across the essential filter increases beyond a particle-laden filter threshold 730 configured in dependence of an air flow through the essential filter 150, then a particle-laden filter condition is detected. In this case the pressure difference across the essential filter is in the region 1540, 1630, where it can be assumed that the filter is clogged.

In some cases, reliable detection may be difficult to achieve when air flow through the essential filter is very small. To avoided false detections, the control unit 170 may optionally be arranged to inactivate missing filter detection, malfunctioning filter detection and/or particle-laden filter detection in case the air flow through the essential filter 150 is below a configurable minimum limit value 1550, 1640. Detection of particle-laden filter conditions may also be inactivated when the dust extractor is operating in this region of air flow.

As noted above, the filter arrangement 200 may also comprise a pre-filter 240 with a pre-filter inlet and a pre-filter outlet arranged upstream from the essential filter 150. A third pressure sensor and a fourth pressure sensor may be arranged to measure a pressure difference between the pre-filter inlet air pressure P1 and the pre-filter outlet air pressure P2. The control unit 170 is then also arranged to detect a state of the pre-filter 240 based on the pressure difference between the pre-filter inlet air pressure P1 and the pre-filter outlet air pressure P2. The detection principles applied to detect the state of the essential filter 150 can of course also be re-used for detecting the state of the pre-filter 240, such as if the pre-filter is clogged or damaged or even missing. Of course, the pressure sensors arranged to measure pressures P2 and P3 may be realized by the same sensor or by different sensors.

The detection of essential filter state 150 can be improved if information regarding the state of the pre-filter 240 is known to the control unit 170. For instance, pressure readings during cleaning operations of the pre-filter are likely to be associated with relatively large errors. According to some aspects the control unit 170 is arranged to paus essential filter detection operations during pre-filter cleaning.

With reference to Figure 2, if the pre-filter 240 is in a clogged or particle-laden state, vacuum is likely to build up from the blower arrangement 160 past the essential filter 150 such that the pressures P2 and P3 also drop. A reduced pressure P3 of course also means that the pressure difference P3-P4 is reduced even if the essential filter is not particularly particle-laden. Thus, by knowing the pressure drop over the pre-filter 240, an erroneous detection of particle-laden essential filter can be avoided. To summarize, the control unit 170 is, according to some aspects, arranged to detect a state of the essential filter 150 based on the detected state of the pre-filter 240. For example, the detected state of the pre-filter 240 may be the pressure drop P1-P2 measured over the pre-filter.

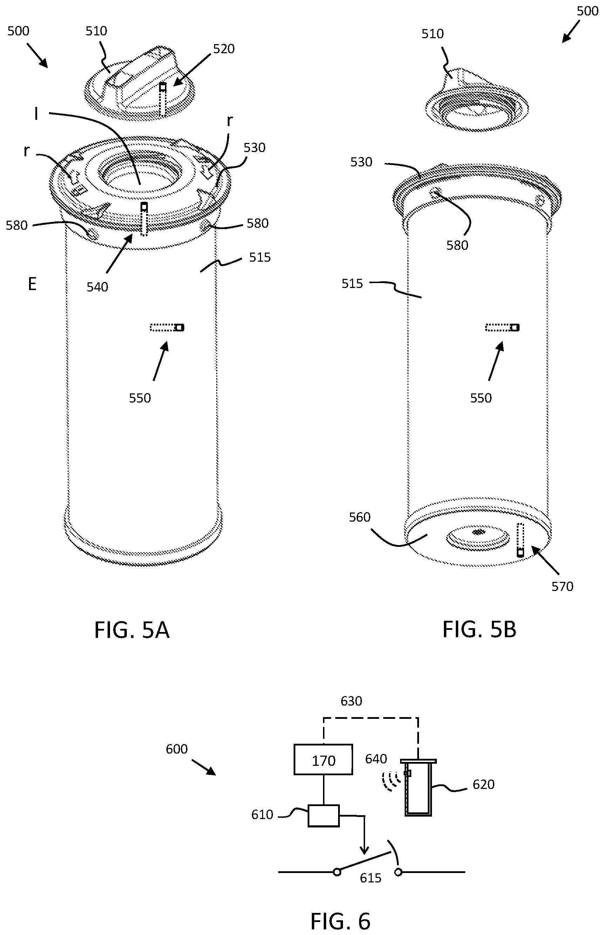

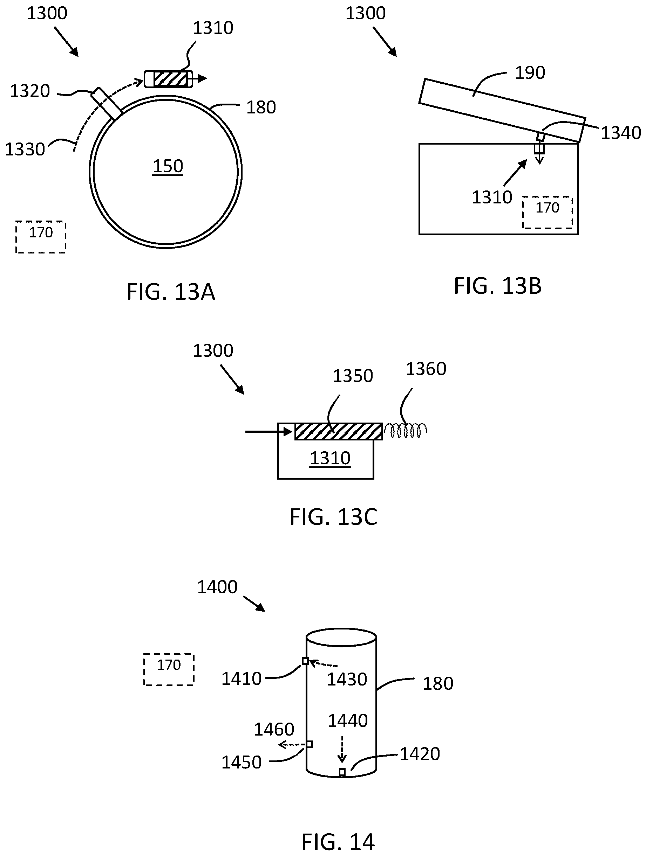

With reference again to Figures 1A-C, the dust extractors 100 may comprise control units 170 arranged to detect if an essential filter 150 is present in the filter holder 180, and to prevent dust extraction operation by the dust extractor 100 in case no essential filter 150 is detected as present in the filter holder 180. Figure 6 schematically illustrates a mechanism 600 for preventing dust extraction operation, or even operation of the dust generator (such as a grinder or saw). A switch or actuator 610 is arranged to break a circuit 615 and thereby inactivate a dust extractor 100 and/or construction equipment connected to the dust extractor. The switch or actuator 610 is controlled by the control unit 170 via wire or wireless link. The control unit 170 is connected to the pressure sensor arrangements discussed above via wire 630 and/or via wireless link 640. Electrical switches will be further discussed below in connection to Figure 14.

According to aspects, the control unit 170 in the dust extractor 100 is arranged to detect if an essential filter 150 is present in the filter holder 180 or not, and to trigger a warning signal to an operator of the dust extractor 100 in case no essential filter 150 is detected as present in the filter holder 180. Equivalently, the control unit 170 in the dust extractor 100 can be arranged to detect if an essential filter 150 is present in the filter holder 180, and to trigger a notification signal to an operator of the dust extractor 100 in case an essential filter 150 is detected as present in the filter holder 180. The operator then knows that safe operation is not jeopardized due to a lacking essential filter. The warning signal and/or notification signal may, e.g., comprise a green and red light, and/or an audible signal.

Of course, the dust extractors discussed herein may also comprise a plurality of essential filters 150, each with a respective blower arrangement 160. The control unit 170 is then arranged to inactivate a blower arrangement in case the respective essential filter 150 is detected as not present in the filter holder 180 or as associated with malfunction. This way a blower arrangement can be selectively inactivated in dependence of the functional state of the respective essential filters. In case only one out of, say, three essential filters is missing or malfunctioning, some dust extraction functionality may still be maintained.

The sensor arrangement for measuring pressures P1, P2, P3, P4 or pressure differences P1-P2, P3-P4 (or P2-P4) can advantageously be integrated in a filter unit. This filter unit may be a disposable filter unit, or a filter unit adapted to be removed from the dust extractor 100, cleaned, and replaced in the dust extractor 100.

Figure 4A exemplifies one such filter unit comprising an integrated pressure sensor arrangement 420. This sensor arrangements extend from a filter interior I (where the pressure is either P2 or P3) to the filter exterior E (where the pressure is either P1 or P4) though the filter wall 425. This type of integrated sensor arrangement 420 may furthermore comprise a wireless transmitter configured to transmit measurement data to the control unit 170.

The essential filters discussed herein are configured to receive the particle-laden air flow into the filter interior, and to output the clean air flow through the filter exterior. Thus, the filter interior is to be construed as the filter dirty side, while the filter exterior is to be construed as the filter clean side.

Figure 4B shows a similar filter unit comprising an integrated sensor arrangement 430 extending from a filter interior I to the filter exterior E though a filter flange 440. This integrated sensor arrangement may also comprise a wireless transmitter for communicating measurement data to the control unit 170.

Figures 5A and 5B illustrate another example filter device 500. This filter device comprises a lid 510, a flange 530, and a filter body 515. Sensor arrangements 520, 530, 550, 570 may be integrated in the lid 520, through the flange 530, through the filter body wall 515, or extending through a bottom portion 560, respectively. Note the radially extending portion 580. This radially extending member can be used with advantage to engage a switch or to open up a recess for receiving a corresponding protrusion upon turning the filter into a locking position. The direction of rotation for locking the filter 500 is indicated by the arrows denoted as r in Figure 5A. Such applications will be discussed below in connection to Figures 13 and 14.

To summarize, Figures 4A-B and Figures 5A-B illustrate essential filter units 400, 450, 500 having a filter interior I and a filter exterior E. The essential filter units comprise an integrated sensor arrangement 420, 430, 520, 540, 550, 570 arranged to indicate a difference between an inlet air pressure P3 associated with the filter interior I and an outlet air pressure P4 associated with the filter exterior E. The integrated sensor arrangement 420, 430, 520, 540, 550, 570 is arranged to be coupled to a control unit 170.

According to some aspects, the essential filter units 500 comprise at least one radially protruding member 580 arranged to activate an electrical switch upon turning the essential filter into a locking position in a filter holder 180, and/or to open up a recess for receiving a protrusion.

According to aspects, the essential filter unit 400, 450, 500 comprises an energy source arranged to power the integrated sensor arrangement 420, 430, 520, 540, 550, 570. This energy source may, e.g., be a battery, a capacitor, or a small fuel cell. The energy source may be replaceable or rechargeable, or dimensioned to last for the life-time of the filter unit.

According to other aspects, the essential filter unit 400, 450, 500 comprises a wireless transmitter arrange to transmit data to the control unit 170. This wireless transmitter was discussed above. It is preferably a low-cost low-power radio device powered by the integrated power source. This way, a disposable low-cost filter unit may be provided with integrated sensors and radio transmitter which is disposable.

As shown in Figures 4A and 5A-B, the integrated sensor arrangement 420, 550 may extend through a filter wall 425 from the filter interior I to the filter exterior E. This way pressures P2/P3 and P4 are conveniently measured by a single device extending though the filter wall, preferably with some form of seal arranged between the sensor and the filter wall. The integrated sensor arrangement 430, 540 may also extend through a filter flange 430, 530 from the filter interior I to the filter exterior E, as illustrated in Figures 4B and 5A.

Another option is to integrate a sensor arrangement 520 with a filter lid 510 of the essential filter 500 as shown in Figure 5A, and/or to arrange integrated sensor arrangement 570 extending through a filter bottom portion 560 from the filter interior I to the filter exterior E as shown in Figure 5B.

Figure 7 illustrates a range of pressure differences 700 that may be detected by the pressure sensor arrangements discussed above.

A missing filter may be declared by the control unit 170 in case the pressure difference Δp is smaller than a configurable missing filter threshold 710.

A malfunctioning filter may be declared by the control unit 170 in case the pressure difference Δp is between the missing filter threshold 710 and a configurable filter malfunction threshold 720.

A fully particle-laden or clogged filter may be declared by the control unit 170 in case the pressure difference Δp is above a configurable particle-laden filter threshold 730.

The control unit 170 may optionally also be arranged to detect a nearly particle-laden essential filter if the pressure difference is above a configurable nearly particle-laden filter threshold 740. This means that the filter is still operational, but that a new filter will be required within a pre-determined period of time.

Figure 8 schematically illustrates a fleet management system 800 which comprises a server 830 with a database 840. The server 830 is connected in some way 820a, 820b, 820c to dust extractors 100 and other devices comprising a plurality of filter arrangements 810a, 810b, 810c. The connections 810a, 810b, 810c may be, e.g., wireless connections, wired connections, or connections via storage media such as removable memory devices.

The server 830 may also be communicatively coupled to a filter storage central 850 where new filter arrangements are stored. It is desired to maintain a sufficiently large inventory of filter arrangements in the filter storage central, but not an overly large inventory.

By obtaining data associated with the type of pressure measurements, and/or differential pressure measurements discussed above, the server can plan when to schedule filter maintenance, and also plan purchasing of filters to replenish the storage 850.

To summarize, Figure 8 schematically illustrates a fleet management system comprising a server 830 operatively connected to a database 840 for managing a plurality of dust extractors 100. The server 830 is arranged to obtain data related to one or more filter arrangements 810a, 810b, 810c comprised in the dust extractors 100 and to maintain an information record in the database 840 for each of the one or more filter arrangements 810a, 810b, 810c, and to schedule a filter maintenance operation or a filter replacement operation based on the maintained information records.

Figure 9 is a flow chart illustrating a method for detecting a state of an essential filter 150 in a filter arrangement 200, 300, 400, 450 for a heavy duty dust extractor 100. The filter arrangement is any of the filter arrangements discussed above, i.e., a filter arrangement comprising a filter holder 180, an essential filter 150, a filter inlet 250, a filter outlet 260, a first air pressure sensor 310 and a second air pressure sensor 320. The method comprises measuring S1, by the first air pressure sensor 310, an inlet air pressure P3 associated with the filter inlet 250, measuring S2, by the second air pressure sensor 320, an outlet air pressure P4 associated with the filter outlet 260, and detecting S3 the state of the essential filter 150 based on a pressure difference between the inlet air pressure P3 and the outlet air pressure P4.

Generally, the control units 170 discussed herein are arranged to perform methods. Thus, the functions of the control units 170 may equally well be formulated as corresponding methods which the control unit is arranged to perform. For instance, the methods disclosed herein optionally comprises:
Determining the pressure difference between the inlet air pressure P2/P3 and the outlet air pressure P4 by averaging or low-pass filtering measurement values from the first and second air pressure sensors 310, 320.

Determining the pressure difference between the inlet air pressure P3 and the outlet air pressure P4 after a settling time duration of filter operation.

Detecting a missing essential filter if the pressure difference is smaller than a configurable missing filter threshold 710.

Detecting a malfunctioning essential filter if the pressure difference is between the missing filter threshold 710 and a configurable filter malfunction threshold 720.

Detecting a particle-laden essential filter if the pressure difference is above a configurable particle-laden filter threshold 730.

Detecting a state of the pre-filter 240 based on the pressure difference between the pre-filter inlet air pressure P1 and the pre-filter outlet air pressure P2.

Figure 10 schematically illustrates, in terms of a number of functional units, the general components of a control unit 170. Processing circuitry 1010 is provided using any combination of one or more of a suitable central processing unit CPU, multiprocessor, microcontroller, digital signal processor DSP, etc., capable of executing software instructions stored in a computer program product, e.g. in the form of a storage medium 1030. The processing circuitry 1010 may further be provided as at least one application specific integrated circuit ASIC, or field programmable gate array FPGA.

Particularly, the processing circuitry 1010 is configured to cause the device 170 to perform a set of operations, or steps, such as the methods discussed in connection to Figure 5 and the discussions above. For example, the storage medium 1030 may store the set of operations, and the processing circuitry 1010 may be configured to retrieve the set of operations from the storage medium 1030 to cause the device to perform the set of operations. The set of operations may be provided as a set of executable instructions. Thus, the processing circuitry 1010 is thereby arranged to execute methods as herein disclosed.

The storage medium 1030 may also comprise persistent storage, which, for example, can be any single one or combination of magnetic memory, optical memory, solid state memory or even remotely mounted memory.

The device 170 may further comprise an interface 1020 for communications with at least one external device. As such the interface 1020 may comprise one or more transmitters and receivers, comprising analogue and digital components and a suitable number of ports for wireline or wireless communication.

The processing circuitry 1010 controls the general operation of the control unit 170, e.g., by sending data and control signals to the interface 1020 and the storage medium 1030, by receiving data and reports from the interface 1020, and by retrieving data and instructions from the storage medium 1030.

Figure 11 illustrates a computer readable medium 1110 carrying a computer program comprising program code means 1120 for performing the methods illustrated in Figure 9 and/or for executing the various functions discussed above, when said program product is run on a computer. The computer readable medium and the code means may together form a computer program product 1100.

The more clogged the air filter 150 becomes, the higher the resistance encountered by the motor in the blower arrangement 160 when drawing air through the air filter 150 becomes. However, the load on the blower arrangement 160 actually reduces as the resistance for drawing air through the air filter 150 increases. In other words, the harder it gets to draw air through the air filter 150, the easier it becomes for the motor to turn the impeller. This is because, as the vacuum level P4 increases downstream from the air filter 150, the impeller blades rotate more easily due to the reduced air resistance. In fact, in complete vacuum, the impeller would not encounter any friction or resistance from air whatsoever and the load on the motor would be at a minimum.

This means that an impeller motor draws maximum power when the air filter 150 is not present. Presence of a fresh clean air filter 150 can be seen as a slight decrease in motor power compared to when no filter is present, and a fully particle laden air filter implies minimum power consumed by the motor.

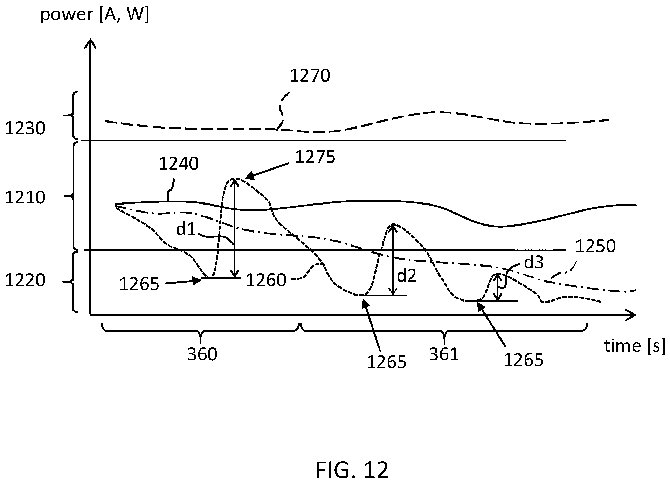

Figure 12 shows a graph of power consumed by the motor, e.g., in terms of current (measured in Amperes, A) or in terms of Watts (W) over time. A normal power range 1210 has been defined as a power range in which the motor consumed power is normally comprised. A low power range 1220 is defined below the normal power range, and a high power 1230 range is defined above the normal power range.

During normal operation, the power consumed by the motor should be comprised in the normal power range 1210, as indicated by the solid curve 1240. The consumed power can be expected to fluctuate some due to varying amount of debris sucked in by the dust extractor, and also variation in density in the particle laden air. However, as the filters 150, 240 get more and more laden with particles, the power consumed is expected to decrease since the air pressure P4 downstream from the essential filter 150 drops, as illustrated by the dash-dotted curve 1250.

Dust extractors comprising pre-filters 240 often execute cleaning operations where air is temporarily pushed backwards through the pre-filter 240 in order to clean the filter. In this case the power curve can be expected to exhibit a behavior like the dotted curve 1260, gradually decreasing to lower and lower minimum values 1265. The power values of these minimum values 1265 can be used to detect when the essential filter 150 needs to be replaced or cleaned. Alternatively or in combination, consecutive differences d1, d2, d3 between the peaks 1275 and the troughs 1265 of the power curve 1250 can be used to detect when the essential filter is in need of replacement or cleaning. A small difference means that the essential filter is becoming clogged. The difference value d1, d2, d3 can be tracked over time in order to estimate when the filter needs to be replaced or cleaned. This way filter replacement operations can be planned.

A missing essential filter 150 can be detected by comparing the power curve 1270 to the high power range 1230. In case a pre-filter 240 is arranged in the dust extractor 100, the peaks of the power curve can be compared to the high power range 1230, and a missing essential filter can be detected if the motor draws power in the high power region.

To summarize, there is disclosed herein a control unit 170 for a dust extractor 100. The control unit 170 is arranged to monitor a power consumed by one or more impeller motors comprised in a blower arrangement 160 of the dust extractor, and to arranged to detect a state of an essential filter (150) of the dust extractor (100) based on the power consumed by the one or more impeller motors, as exemplified in Figure 12.

According to some aspects, the control unit 170 is configured to detect a missing essential filter 150 by comparing a power consumed by the one or more impeller motors to a pre-determined high power range 1230.

According to other aspects, peaks of the power curve can be compared to the high power range 1230, and a missing essential filter can be detected if the motor draws power in the high power region.

According to further aspects, the control unit 170 is configured to detect an essential filter 150 in need of replacement or cleaning by determining a sequence of minimum values 1265 of the power consumed by the one or more motors, and to detect when the essential filter 150 needs to be replaced or cleaned based on the sequence of minimum values 1265, and/or on a difference between consecutive maximum and minimum consumed power values.

Figures 13A-C show an arrangement 1300 for detecting presence of an essential filter 150 in a filter holder 180. The arrangement comprises a recess 1310 arranged to receive a corresponding protrusion 1340 arranged on a lid 190 of a dust extractor 100 when the essential filter 150 is received in the filter holder 180, and to prevent the protrusion 1340 from entering the recess 1310 when no essential filter 150 is received in the filter holder 180, thereby preventing closing of the lid 190.

The recess 1310 may, e.g., be arranged to be covered by a hatch 1350 or slidable member which is arranged biased into a closed position, e.g., by a resilient member 1360 such as a spring or rubber part, to cover the recess 1310 when no essential filter 150 is present in the holder 180. When an essential filter 150 is inserted into the filter holder 180, a radially protruding member 1320 (not shown to scale in Figure 13A) on the essential filter 150 moves along an arcuate path 1330 to engage the hatch 1350. This overcomes the biasing force from the resilient member 1360 to open the hatch and thereby allow the protrusion 1340 to enter the recess 1310. The lid 190 may be configured such that it cannot be closed if the protrusion 1340 cannot enter the recess 1310. If the lid is not properly closed, the conduits 140 can be configured to be in fluid connection with outside air, thereby preventing dust extraction. Starting of the dust extractor 100 may be prevented in case the lid is not properly closed.

The recess may be arranged to be opened by a radially protruding member arranged on the essential filter, such as the radially protruding members 580 shown in Figures 5A and 5B. Thus, the recess is arranged to receive the protrusion 1340 arranged on the lid 190 in response to turning the essential filter 150 into a filter locking position.

Figure 14 schematically illustrates an arrangement 1400 for detecting presence of an essential filter 150 in a filter holder 180. The arrangement comprises an electrical switch 1410, 1420, 1450 arranged to be engaged when the essential filter 150 is received in the filter holder 180 and to be disengaged otherwise.

One example of the electrical switch 1410 may be arranged to be engaged in response to a turning motion 1430 of the essential filter 150, e.g., as the essential filter 150 is turned into a locking position. For instance, the electrical switch 1410 may be engaged by a radially protruding member such as the radially protruding members 580 shown in Figures 5A and 5B or the radially protruding member 1320 shown in Figure 13A. This way, as an essential filter like the essential filter 500 illustrated in Figure 5A is turned r into locking position, the switch 1410 is activated and presence of an essential filter in locking position is thereby reliably detected by, e.g., the control unit 170.

Another example electrical switch 1420 may be arranged in the filter holder 180, e.g., at the bottom of the filter holder 180 such that it is engaged 1440 as the essential filter 150 is locked into position.

An electrical switch 1450 may also be arranged in or on the side wall of the filter holder 180, such that it is pressed outwards 1460 by the essential filter 150 as it is inserted into the filter holder 180. This way presence of an essential filter can be reliably detected since the switch will not be activated unless an essential filter is inserted into the filter holder 180.

The electrical switch 1420, 1450 may also be realized as a radio frequency identification (RFID) receiver configured to receive an identification transmission from a corresponding RFID transmitter arranged on the essential filter 150. This way the control unit 170 can detect presence of an essential filter, and also verify that the essential filter meets pre-determined requirements stored in the control unit 170. A warning signal can be triggered, or machine operation can be prevented, if the wrong type of filter is used, i.e., a filter type not meeting the pre-determined requirements.

This type of RFID based detection system can be applied with advantage in systems such as that illustrated in Figure 8. The server 830 may then configure the requirements on filter type to be used by the control unit 170.

The electrical switch 1410, 1420, 1450 may be the same switch 615 discussed above in connection to Figure 6. Thus, the switch can be used to prevent operation of the dust extractor in case no essential filter is present and correctly mounted in locking position.

The various functions discussed above related to actions performed in response to detecting presence of an essential filter are applicable also for the arrangements 1300, 1400, such as preventing operation of the dust extractor in case no essential filter is detected, and triggering a warning signal to an operator of the dust extractor in case no essential filter is detected.

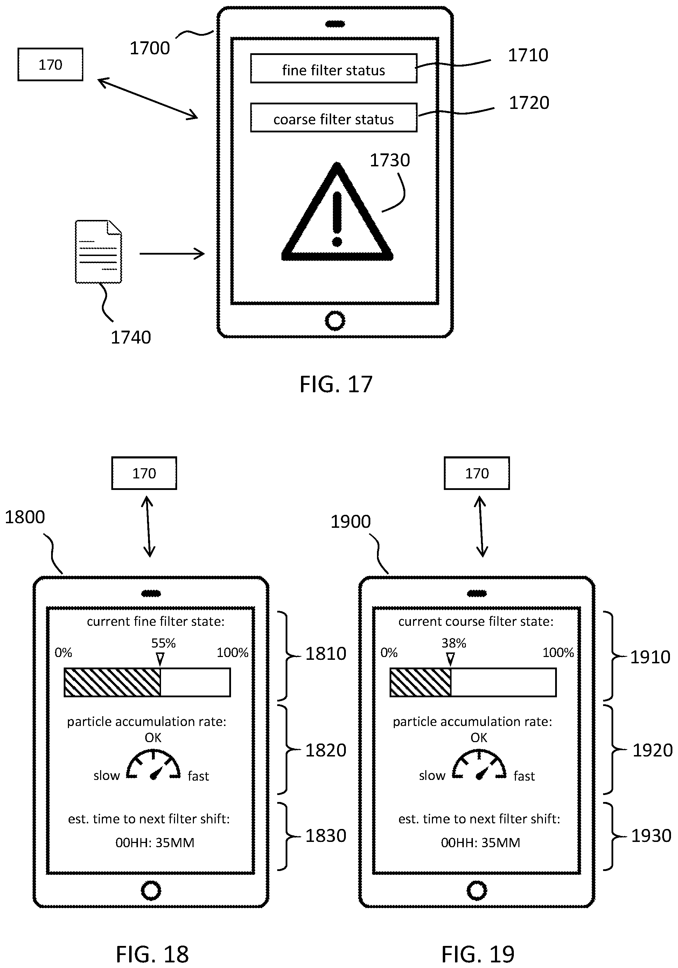

Figures 17-19 illustrate various display devices 1700, 1800, 1900 arranged to communicate with a filter arrangement 200, 300, 400, 450 like that discussed above, and in particular with the control unit 170 of this filter arrangement, as shown in Figure 1A. The control unit 170 may as discussed above form part of the filter unit, and/or be comprised in the dust extraction device 100. The display devices are all arranged to receive information indicative of a filter state from the control unit 170 comprised in the filter arrangement, and to relay this information , sometimes in processed form, to the operator. The communication between the control unit 170 and the display device is preferably wireless, such as via Bluetooth or 802.11 Wi-Fi. However, the communication between the control unit 170 and the display device may also be via wire, e.g., if the display device is fixedly mounted on the dust extractor 100, e.g., in connection to the lid 190.

In the example of Figure 17, a display device 1700 is shown with a user interface indicating both fine filter status 1710 and course filter status 1720 although only one of them may also be shown, such as only the status of the essential filter. The filter status may, e.g., be indicated by green color in case no problems have been detected. A yellow color may indicate a non-critical filter condition, while a red color, possibly complemented by a warning symbol 1730 and/or audible alarm signal may indicate a critical filter condition, such as a missing essential filter and/or a malfunctioning essential filter.

The communicated filter state for any of the fine filter and/or course filter may comprise any of a pressure difference, a particle load level 1810, 1910, a filter malfunction condition, a missing filter condition, and/or a particle accumulation rate 1820,1920. The displayed data may either be determined by the control unit 170 and communicated as pre-determined values to the display device for display to an operator. However, the display device may also receive raw data such as pressure difference readings and flow measurements, and perform the detection calculations on an an-board processing circuit, as discussed above in connection to Figure 7 and Figures 15-16. The current filter state, in terms of particle load, may be displayed as shown in Figure 18 for the fine filter and in Figure 19 for the course pre-separator filter.

The display device may display a particle accumulation rate 1820, 1920, indicating to an operator the rate at which particulate matter is being trapped by the filter at any given point in time. This value may, e.g., be determined from a change in pressure difference over the filter over time, potentially normalized using an estimated air flow value or a measured air flow value, as discussed above in connection to Figure 15 and Figure 16. According to an example, the time dependent test statistic $T \left(t\right) = \frac{Δ p \left(t\right) - m}{{x}_{flow} \left(t\right)} = k$ where Δ*p* is the pressure drop, *k* is a proportionality constant, and m is a constant bias, can be used to determine accumulation rate Δ*T* as $Δ T = \frac{T \left(t2\right) - T \left(t1\right)}{t 2 - t 1}$ where *t*2 and *t*1 are time instants, and where *t*2 > *t*1.

The display device may furthermore be arranged to determine and/or display an estimated time to next filter shift associated with any of an essential filter and/or a course filter in a cyclone of the dust extractor. This time may be estimated in dependence of the pressure difference over the filter, possibly in combination with the particle accumulation rate. In particular, a current particle load may be determined from the test statistic T and the margin to a threshold, such as the threshold 740 and/or 730, may be estimated based on the accumulation rate Δ*T.* This way, an estimated time to filter replacement can be obtained by relating the current margin to the thresholds 730, 740 to time via the accumulation rate Δ*T.*

The different signal processing operations performed by the display device may be performed in dependence of input data 1740 indicating the type of filter, and the different threshold values to use for the different detections of, e.g., missing filter conditions and/or malfunctioning filter conditions. For instance, different filters are likely associated with different nominal operating characteristic 1510. The type of dust extractor may also have an impact on the displayed data.

## Claims

1. A filter arrangement (200, 300, 400, 450) for a heavy duty dust extractor (100), the filter arrangement comprising a filter holder (180), an essential filter (150), a filter inlet (250), a filter outlet (260), a first air pressure sensor (310) and a second air pressure sensor (320), wherein the first air pressure sensor (310) is arranged to indicate an inlet air pressure (P3) associated with the filter inlet (250) and the second air pressure sensor (320) is arranged to indicate an outlet air pressure (P4) associated with the filter outlet (260), the filter arrangement further comprising a control unit (170) arranged to detect a state of the essential filter (150) based on a pressure difference between the inlet air pressure (P3) and the outlet air pressure (P4), wherein the control unit (170) is arranged to detect a missing essential filter if the pressure difference is smaller than a configurable missing filter threshold (710), said filter arrangement being **characterized in that** the control unit (170) is arranged to determine the pressure difference between the inlet air pressure (P3) and the outlet air pressure (P4) after a settling time duration of filter operation.

2. The filter arrangement (200, 300, 400, 450) according to claim 1, wherein the control unit (170) is arranged to determine the pressure difference between the inlet air pressure (P3) and the outlet air pressure (P4) by averaging or low-pass filtering measurement values from the first and second air pressure sensors (310, 320).

3. The filter arrangement (200, 300, 400, 450) according to any previous claim, wherein the control unit (170) is arranged to detect a malfunctioning essential filter if the pressure difference is between the missing filter threshold (710) and a configurable filter malfunction threshold (720).

4. The filter arrangement (200, 300, 400, 450) according to any previous claim, wherein the control unit (170) is arranged to detect a particle-laden essential filter if the pressure difference is above a configurable particle-laden filter threshold (730).

5. The filter arrangement (200, 300, 400, 450) according to any previous claim, wherein the first air pressure sensor (310) is arranged in a conduit (140) arranged to guide an air flow towards the filter inlet (250).

6. The filter arrangement (200, 300, 400, 450) according to any previous claim, wherein the second air pressure sensor (320) is arranged in the filter housing (170).

7. The filter arrangement (200, 300, 400, 450) according to any previous claim, wherein at least one of the first and the second air pressure sensor (310, 320) is arranged to be wirelessly connected (410) to the control unit (170).

8. The filter arrangement (200) according to any previous claim, comprising a pre-filter (240) with a pre-filter inlet and a pre-filter outlet arranged upstream from the essential filter (150), wherein a third pressure sensor and a fourth pressure sensor are arranged to measure a pressure difference between the pre-filter inlet air pressure (P1) and the pre-filter outlet air pressure (P2), wherein the control unit (170) is arranged to detect a state of the pre-filter (240) based on the pressure difference between the pre-filter inlet air pressure (P1) and the pre-filter outlet air pressure (P2).

9. The filter arrangement (200) according to claim 8, wherein the control unit (170) arranged to detect a state of the essential filter (150) based on the detected state of the pre-filter (240).

10. The filter arrangement (200, 300, 400, 450) according to any previous claim, wherein the missing filter threshold (710) and/or the filter malfunction threshold (720) is configured in dependence of an air flow through the essential filter (150).

11. The filter arrangement (200, 300, 400, 450) according to any previous claim, wherein the particle-laden filter threshold (730) is configured in dependence of an air flow through the essential filter (150).

12. The filter arrangement (200, 300, 400, 450) according to any previous claim, wherein the control unit (170) is arranged to inactivate missing filter detection and/or malfunctioning filter detection in case the air flow through the essential filter (150) is below a configurable minimum limit value (1550, 1640).

13. The filter arrangement (200, 300, 400, 450) according to any previous claim, wherein the control unit (170) is arranged to communicate a filter state to a display device (1700, 1800, 1900).

14. The filter arrangement (200, 300, 400, 450) according to claim 13, where the communicated filter state comprises any of: a pressure difference, a particle load level, a filter malfunction condition, a missing filter condition, and/or a particle accumulation rate.

15. A dust extractor (100) comprising a filter arrangement (200, 300, 400, 500) according to any of claims 1-14.

16. The dust extractor (100) according to claim 15, wherein the control unit (170) is arranged to detect if an essential filter (150) is present in the filter holder (180), and to prevent dust extraction operation by the dust extractor (100) in case no essential filter (150) is detected as present in the filter holder (180) and/or to trigger a warning signal to an operator of the dust extractor (100) in case no essential filter (150) is detected as present in the filter holder (180).

17. The dust extractor (100) according to any of claims 15-16, comprising a plurality of essential filters (150), each with a respective blower arrangement 160, wherein the control unit (170) is arranged to inactivate a blower arrangement in case the respective essential filter (150) is detected as not present in the filter holder (180) or as associated with malfunction.

18. A fleet management system comprising a server (830) operatively connected to a database (840) and a plurality of dust extractors (100) according to any of claims 15-17, wherein the server (830) is arranged to obtain data related to one or more filter arrangements (810a, 810b, 810c) comprised in the dust extractors (100) and to maintain an information record in the database (840) for each of the one or more filter arrangements (810a, 810b, 810c), and to schedule a filter maintenance operation or a filter replacement operation based on the maintained information records.

19. A method for detecting a state of an essential filter (150) in a filter arrangement (200, 300, 400, 450) for a heavy duty dust extractor (100), the filter arrangement comprising a filter holder (180), an essential filter (150), a filter inlet (250), a filter outlet (260), a first air pressure sensor (310) and a second air pressure sensor (320), the method comprising
measuring (S1), by the first air pressure sensor (310), an inlet air pressure (P3) associated with the filter inlet (250),
measuring (S2), by the second air pressure sensor (320), an outlet air pressure (P4) associated with the filter outlet (260), and
said method being **characterized in that** it further comprises the steps of detecting (S3) the state of the essential filter (150) based on a pressure difference between the inlet air pressure (P3) and the outlet air pressure (P4) determined after a settling time duration of filter operation,
wherein detecting the state of the essential filter comprises detecting a missing essential filter if the pressure difference is smaller than a configurable missing filter threshold (710).

## Patentansprüche

1. Filteranordnung (200, 300, 400, 450) für einen Hochleistungsstaubabsauger (100), die Filteranordnung umfassend einen Filterhalter (180), einen wesentlichen Filter (150), einen Filtereinlass (250), einen Filterauslass (260), einen ersten Luftdrucksensor (310) und einen zweiten Luftdrucksensor (320) umfasst, wobei der erste Luftdrucksensor (310) angeordnet ist, um einen Einlassluftdruck (P3) anzuzeigen, der dem Filtereinlass (250) zugeordnet ist, und der zweite Luftdrucksensor (320) angeordnet ist, um einen Auslassluftdruck (P4) anzuzeigen, der dem Filterauslass (260) zugeordnet ist, die Filteranordnung ferner umfassend eine Steuereinheit (170), die angeordnet ist, um einen Zustand des wesentlichen Filters (150) basierend auf einer Druckdifferenz zwischen dem Einlassluftdruck (P3) und dem Auslassluftdruck (P4) zu erfassen, wobei die Steuereinheit (170) angeordnet ist, um einen fehlenden wesentlichen Filter zu erfassen, falls die Druckdifferenz geringer als eine konfigurierbare Schwelle (710) für einen fehlenden Filter ist, wobei die Filteranordnung **dadurch gekennzeichnet, ist dass** die Steuereinheit (170) angeordnet ist, um die Druckdifferenz zwischen dem Einlassluftdruck (P3) und dem Auslassluftdruck (P4) nach einer Setzungszeitdauer des Filterbetriebs zu bestimmen.

2. Filteranordnung (200, 300, 400, 450) nach Anspruch 1, wobei die Steuereinheit (170) angeordnet ist, um die Druckdifferenz zwischen dem Einlassluftdruck (P3) und dem Auslassluftdruck (P4) durch eine Mittelwertbildung oder eine Tiefpassfilterung von Messwerten des ersten und des zweiten Luftdrucksensors (310, 320) zu bestimmen.

3. Filteranordnung (200, 300, 400, 450) nach einem vorstehenden Anspruch, wobei die Steuereinheit (170) angeordnet ist, um einen wesentlichen Filter zu erfassen, der eine Fehlfunktion aufweist, falls die Druckdifferenz zwischen der Schwelle (710) für einen fehlenden Filter und einer konfigurierbaren Schwelle (720) für eine Filterfehlfunktion liegt.

4. Filteranordnung (200, 300, 400, 450) nach einem vorstehenden Anspruch, wobei die Steuereinheit (170) angeordnet ist, um einen partikelbeladenen wesentlichen Filter zu erfassen, falls die Druckdifferenz über einer konfigurierbaren Schwelle (730) für einen partikelbeladenen Filter liegt.

5. Filteranordnung (200, 300, 400, 450) nach einem vorstehenden Anspruch, wobei der erste Luftdrucksensor (310) in einer Leitung (140) angeordnet ist, die angeordnet ist, um einen Luftstrom zu dem Filtereinlass (250) hin zu führen.

6. Filteranordnung (200, 300, 400, 450) nach einem vorstehenden Anspruch, wobei der zweite Luftdrucksensor (320) in dem Filtergehäuse (170) angeordnet ist.

7. Filteranordnung (200, 300, 400, 450) nach einem vorstehenden Anspruch, wobei mindestens einer von dem ersten und dem zweiten Luftdrucksensor (310, 320) angeordnet ist, um drahtlos mit der Steuereinheit (170) verbunden (410) zu sein.

8. Filteranordnung (200) nach einem vorstehenden Anspruch, umfassend einen Vorfilter (240) mit einem Vorfiltereinlass und einem Vorfilterauslass, angeordnet stromaufwärts von dem wesentlichen Filter (150), wobei ein dritter Drucksensor und ein vierter Drucksensor angeordnet sind, um eine Druckdifferenz zwischen dem Vorfiltereinlassluftdruck (P1) und dem Vorfilterauslassluftdruck (P2) zu messen, wobei die Steuereinheit (170) angeordnet ist, um einen Zustand des Vorfilters (240) basierend auf der Druckdifferenz zwischen dem Vorfiltereinlassluftdruck (P1) und dem Vorfilterauslassluftdruck (P2) zu erfassen.

9. Filteranordnung (200) nach Anspruch 8, wobei die Steuereinheit (170) angeordnet ist, um einen Zustand des wesentlichen Filters (150) basierend auf dem erfassten Zustand des Vorfilters (240) zu erfassen.

10. Filteranordnung (200, 300, 400, 450) nach einem vorstehenden Anspruch, wobei die Schwelle (710) für einen fehlenden Filter und/oder die Schwelle (720) für eine Filterfehlfunktion in Abhängigkeit von einem Luftstrom durch den wesentlichen Filter (150) konfiguriert ist.

11. Filteranordnung (200, 300, 400, 450) nach einem vorstehenden Anspruch, wobei die Schwelle (730) für den partikelbeladenen Filter in Abhängigkeit von einem Luftstrom durch den wesentlichen Filter (150) konfiguriert ist.

12. Filteranordnung (200, 300, 400, 450) nach einem vorstehenden Anspruch, wobei die Steuereinheit (170) angeordnet ist, um die Erfassung eines fehlenden Filters und/oder die Erfassung eines fehlerhaften Filters zu deaktivieren, in einem Fall, dass der Luftstrom durch den wesentlichen Filter (150) unter einem konfigurierbaren Mindestgrenzwert (1550, 1640) liegt.

13. Filteranordnung (200, 300, 400, 450) nach einem vorstehenden Anspruch, wobei die Steuereinheit (170) angeordnet ist, um einen Filterzustand an eine Anzeigevorrichtung (1700, 1800, 1900) zu kommunizieren.

14. Filteranordnung (200, 300, 400, 450) nach Anspruch 13, wobei der kommunizierte Filterzustand ein Beliebiges ein beliebiges umfasst von: einer Druckdifferenz, einem Partikelbeladungsgrad, einem Filterfehlfunktionszustand, einem Zustand eines fehlenden Filters und/oder einer Partikelakkumulationsrate.

15. Staubabsauger (100), umfassend eine Filteranordnung (200, 300, 400, 500) nach einem der Ansprüche 1 bis 14.

16. Staubabsauger (100) nach Anspruch 15, wobei die Steuereinheit (170) angeordnet ist, um zu erfassen, ob ein wesentlicher Filter (150) in dem Filterhalter (180) vorhanden ist, und den Staubabsaugbetrieb durch den Staubabsauger (100) zu verhindern, in einem Fall, dass kein wesentlicher Filter (150) als in dem Filterhalter (180) vorhanden erfasst wird, und/oder ein Warnsignal an einen Bediener des Staubabsaugers (100) auszulösen, in einem Fall, dass kein wesentlicher Filter (150) als in dem Filterhalter (180) vorhanden erfasst wird.

17. Staubabsauger (100) nach einem der Ansprüche 15 bis 16, umfassend eine Vielzahl von wesentlichen Filtern (150), jeweils mit einer entsprechenden Gebläseanordnung 160, wobei die Steuereinheit (170) angeordnet ist, um eine Gebläseanordnung zu deaktivieren, in einem Fall, dass der jeweilige wesentliche Filter (150) als nicht in dem Filterhalter (180) vorhanden oder als einer Fehlfunktion zugeordnet erfasst wird.

18. Flottenmanagementsystem, umfassend einen Server (830), der mit einer Datenbank (840) wirkverbunden ist, und eine Vielzahl von Staubabsaugern (100) nach einem der Ansprüche 15 bis 17, wobei der Server (830) angeordnet ist, um Daten in Bezug auf eine oder mehrere Filteranordnungen (810a, 810b, 810c), die in den Staubabsaugern (100) umfasst sind, zu erhalten und einen Informationsdatensatz in der Datenbank (840) für jede der einen oder der mehreren Filteranordnungen (810a, 810b, 810c) zu führen und einen Filterwartungsbetrieb oder einen Filteraustauschbetrieb basierend auf den geführten Informationsdatensätzen zu planen.

19. Verfahren zum Erfassen eines Zustands eines wesentlichen Filters (150) in einer Filteranordnung (200, 300, 400, 450) für einen Hochleistungsstaubabsauger (100), die Filteranordnung umfassend einen Filterhalter (180), einen wesentlichen Filter (150), einen Filtereinlass (250), einen Filterauslass (260), einen ersten Luftdrucksensor (310) und einen zweiten Luftdrucksensor (320), das Verfahren umfassend
Messen (S1), durch den ersten Luftdrucksensor (310), eines Einlassluftdrucks (P3), der dem Filtereinlass (250) zugeordnet ist,
Messen (S2), durch den zweiten Luftdrucksensor (320), eines Auslassluftdrucks (P4), der dem Filterauslass (260) zugeordnet ist, und
wobei das Verfahren **dadurch gekennzeichnet ist, dass** es ferner die Schritte des Erfassens (S3) des Zustands des wesentlichen Filters (150) basierend auf einer Druckdifferenz zwischen dem Einlassluftdruck (P3) und dem Auslassluftdruck (P4) umfasst, die nach einer Setzungszeitdauer des Filterbetriebs bestimmt wird,
wobei das Erfassen des Zustands des wesentlichen Filters das Erfassen eines fehlenden wesentlichen Filters umfasst, falls die Druckdifferenz geringer als eine konfigurierbare Schwelle (710) für einen fehlenden Filter ist.

## Revendications

1. Agencement de filtre (200, 300, 400, 450) pour un extracteur de poussière à usage intensif (100), l'agencement de filtre comprenant un porte-filtre (180), un filtre essentiel (150), une entrée de filtre (250), une sortie de filtre (260), un premier capteur de pression d'air (310) et un deuxième capteur de pression d'air (320), dans lequel le premier capteur de pression d'air (310) est agencé pour indiquer une pression d'air d'entrée (P3) associée à l'entrée de filtre (250) et le deuxième capteur de pression d'air (320) est agencé pour indiquer une pression d'air de sortie (P4) associée à la sortie de filtre (260), l'agencement de filtre comprenant en outre une unité de commande (170) agencée pour détecter un état du filtre essentiel (150) en fonction d'une différence de pression entre la pression d'air d'entrée (P3) et la pression d'air de sortie (P4), dans lequel l'unité de commande (170) est agencée pour détecter un filtre essentiel manquant si la différence de pression est inférieure à un seuil de filtre manquant configurable (710), ledit agencement de filtre étant **caractérisé en ce que** l'unité de commande (170) est agencée pour déterminer la différence de pression entre la pression d'air d'entrée (P3) et la pression d'air de sortie (P4) après une durée de stabilisation du fonctionnement de filtre.

2. Agencement de filtre (200, 300, 400, 450) selon la revendication 1, dans lequel l'unité de commande (170) est agencée pour déterminer la différence de pression entre la pression d'air d'entrée (P3) et la pression d'air de sortie (P4) en calculant la moyenne ou réalisant un filtrage passe-bas de valeurs de mesure provenant des premier et deuxième capteurs de pression d'air (310, 320).

3. Agencement de filtre (200, 300, 400, 450) selon l'une quelconque revendication précédente, dans lequel l'unité de commande (170) est agencée pour détecter un filtre essentiel défectueux si la différence de pression est entre le seuil de filtre manquant (710) et un seuil de dysfonctionnement de filtre configurable (720).

4. Agencement de filtre (200, 300, 400, 450) selon l'une quelconque revendication précédente, dans lequel l'unité de commande (170) est agencée pour détecter un filtre essentiel chargé de particules si la différence de pression est supérieure à un seuil de filtre chargé en particules configurable (730).

5. Agencement de filtre (200, 300, 400, 450) selon l'une quelconque revendication précédente, dans lequel le premier capteur de pression d'air (310) est agencé dans un conduit (140) agencé pour guider un flux d'air vers l'entrée de filtre (250).

6. Agencement de filtre (200, 300, 400, 450) selon l'une quelconque revendication précédente, dans lequel le deuxième capteur de pression d'air (320) est agencé dans le boîtier de filtre (170).

7. Agencement de filtre (200, 300, 400, 450) selon l'une quelconque revendication précédente, dans lequel au moins l'un parmi le premier et le deuxième capteur de pression d'air (310, 320) est agencé pour être connecté sans fil (410) à l'unité de commande (170).

8. Agencement de filtre (200) selon l'une quelconque revendication précédente, comprenant un préfiltre (240) doté d'une entrée de préfiltre et d'une sortie de préfiltre agencée en amont du filtre essentiel (150), dans lequel un troisième capteur de pression et un quatrième capteur de pression sont agencés pour mesurer une différence de pression entre la pression d'air d'entrée de préfiltre (P1) et la pression d'air de sortie de préfiltre (P2), dans lequel l'unité de commande (170) est agencée pour détecter un état du préfiltre (240) en fonction de la différence de pression entre la pression d'air d'entrée de préfiltre (P1) et la pression d'air de sortie de préfiltre (P2).

9. Agencement de filtre (200) selon la revendication 8, dans lequel l'unité de commande (170) est agencée pour détecter un état du filtre essentiel (150) en fonction de l'état détecté du préfiltre (240).

10. Agencement de filtre (200, 300, 400, 450) selon l'une quelconque revendication précédente, dans lequel le seuil de filtre manquant (710) et/ou le seuil de dysfonctionnement de filtre (720) sont configurés en dépendance d'un écoulement d'air à travers le filtre essentiel (150).

11. Agencement de filtre (200, 300, 400, 450) selon l'une quelconque revendication précédente, dans lequel le seuil de filtre chargé en particules (730) est configuré en dépendance d'un flux d'air à travers le filtre essentiel (150).

12. Agencement de filtre (200, 300, 400, 450) selon l'une quelconque revendication précédente, dans lequel l'unité de commande (170) est agencée pour inactiver la détection de filtre manquant et/ou la détection de filtre défectueux dans le cas où l'écoulement d'air à travers le filtre essentiel (150) est inférieur à une valeur limite minimale configurable (1550, 1640).

13. Agencement de filtre (200, 300, 400, 450) selon l'une quelconque revendication précédente, dans lequel l'unité de commande (170) est agencée pour communiquer un état de filtre à un dispositif d'affichage (1700, 1800, 1900).

14. Agencement de filtre (200, 300, 400, 450) selon la revendication 13, où l'état de filtre communiqué comprend l'un quelconque parmi : une différence de pression, un niveau de charge de particules, un état de dysfonctionnement de filtre, un état de filtre manquant, et/ou un taux d'accumulation de particules.

15. Extracteur de poussière (100) comprenant un agencement de filtre (200, 300, 400, 500) selon l'une quelconque des revendications 1 à 14.

16. Extracteur de poussière (100) selon la revendication 15, dans lequel l'unité de commande (170) est agencée pour détecter si un filtre essentiel (150) est présent dans le porte-filtre (180), et pour empêcher une opération d'extraction de poussière par l'extracteur de poussière (100) dans le cas où aucun filtre essentiel (150) n'est détecté comme étant présent dans le porte-filtre (180) et/ou pour déclencher un signal d'avertissement à un opérateur de l'extracteur de poussière (100) dans le cas où aucun filtre essentiel (150) n'est détecté comme étant présent dans le porte-filtre (180).

17. Extracteur de poussière (100) selon l'une quelconque des revendications 15 à 16, comprenant une pluralité de filtres essentiels (150), chacun doté d'un agencement de soufflante 160 respectif, dans lequel l'unité de commande (170) est agencée pour inactiver un agencement de soufflante dans le cas où le filtre essentiel respectif (150) est détecté comme n'étant pas présent dans le porte-filtre (180) ou comme étant associé à un dysfonctionnement.

18. Système de gestion de parc comprenant un serveur (830) connecté fonctionnellement à une base de données (840) et une pluralité d'extracteurs de poussière (100) selon l'une quelconque des revendications 15 à 17, dans lequel le serveur (830) est agencé pour obtenir des données apparentées à un ou plusieurs agencements de filtre (810a, 810b, 810c) compris dans les extracteurs de poussière (100) et pour tenir un registre d'informations dans la base de données (840) pour chacun du ou des agencements de filtre (810a, 810b, 810c), et pour planifier une opération d'entretien de filtre ou de remplacement de filtre en fonction des registres d'informations conservés.

19. Procédé de détection d'un état d'un filtre essentiel (150) dans un agencement de filtre (200, 300, 400, 450) pour un extracteur de poussière à usage intensif (100), l'agencement de filtre comprenant un porte-filtre (180), un filtre essentiel (150), une entrée de filtre (250), une sortie de filtre (260), un premier capteur de pression d'air (310) et un deuxième capteur de pression d'air (320), le procédé comprenant
la mesure (S1), par le premier capteur de pression d'air (310), d'une pression d'air d'entrée (P3) associée à l'entrée de filtre (250),
la mesure (S2), par le deuxième capteur de pression d'air (320), d'une pression d'air de sortie (P4) associée à la sortie de filtre (260), et
ledit procédé étant **caractérisé en ce qu'**il comprend en outre les étapes consistant à détecter (S3) l'état du filtre essentiel (150) en fonction d'une différence de pression entre la pression d'air d'entrée (P3) et la pression d'air de sortie (P4) déterminée après une durée de stabilisation du fonctionnement du filtre,
dans lequel la détection de l'état du filtre essentiel comprend la détection d'un filtre essentiel manquant si la différence de pression est inférieure à un seuil de filtre manquant configurable (710).
